# DEMANDE DE BREVET EUROPEEN

(11) **EP 0 786 393 A1**
(43) Date de publication de la demande: **30.07.1997**
(21) Numéro de dépôt: 97400039.0
(22) Date de dépôt: 08.01.1997
(51) Int. Cl.: B62D 1/04, B60R 21/20

(54) **Volant de direction notamment de véhicule automobile**

(30) Priorité: 25.01.1996 FR 9600876
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90000 Roppe (FR)
(74) Mandataire: Habasque, Etienne Joel Jean-François

(57) **Abrégé**

Ce volant de direction, notamment de véhicule automobile, du type comportant un coussin central (2), une jante (3) et au moins un bras (4) de liaison de la jante au coussin central, revêtus d'un garnissage (5) en matière plastique, le coussin central comportant des moyens (10) de manoeuvre de moyens de commande (11) d'au moins un organe fonctionnel du véhicule, déplaçables par l'utilisateur, par appui sur la face avant de ce coussin central, est caractérisé en ce que le coussin central comporte en outre une coupelle (6) de réception d'au moins une partie d'un module à sac gonflable (7) et en ce que le garnissage (5a) de ce coussin central est semi-rigide, est monté flottant par rapport à la coupelle de réception (6) du module à sac gonflable et est adapté pour actionner les moyens de manoeuvre (10), sous l'action de l'utilisateur.

## Description

La présente invention concerne un volant de direction, notamment de véhicule automobile.

Plus particulièrement, la présente invention concerne un volant de direction qui comporte un coussin central, une jante de volant et au moins un bras de liaison de la jante au coussin central, ces différentes pièces étant revêtues d'un garnissage en matière plastique.

On connaît déjà dans l'état de la technique, des volants de direction dits à coussin central flottant, dans lesquels ce coussin central comporte des moyens de manoeuvre de moyens de commande d'au moins un organe fonctionnel du véhicule, déplaçables par un utilisateur, par appui sur la face avant de ce coussin central.

C'est ainsi par exemple que ces moyens de manoeuvre et de commande peuvent être adaptés pour provoquer l'actionnement de l'avertisseur sonore du véhicule, lorsque l'utilisateur appuie sur la face avant du coussin central.

On connaît également dans l'état de la technique, des volants de direction dans lesquels le coussin central comporte en outre une coupelle de réception d'au moins une partie d'un module à sac gonflable.

Cependant, la structure de ces volants et en particulier de leur coussin central est telle que l'implantation de moyens de manoeuvre et de moyens de commande d'un organe fonctionnel du véhicule est extrêmement difficile.

Le but de l'invention est de proposer un tel volant dont le coussin présente une structure simple et peu encombrante.

A cet effet l'invention a pour objet un volant de direction, notamment de véhicule automobile, du type comportant un coussin central, une jante et au moins un bras de liaison de la jante au coussin central, revêtus d'un garnissage en matière plastique, le coussin central comportant des moyens de manoeuvre de moyens de commande d'au moins un organe fonctionnel du véhicule, déplaçables par l'utilisateur par appui sur la face avant de ce coussin central, caractérisé en ce que le coussin central comporte en outre une coupelle de réception d'au moins une partie d'un module à sac gonflable et en ce que le garnissage de ce coussin central est semi-rigide, est monté flottant par rapport à la coupelle de réception du module à sac gonflable et est adapté pour actionner les moyens de manoeuvre, sous l'action de l'utilisateur.

L'invention sera mieux comprise à l'aide de la description qui va suivre donnée uniquement à titre d'exemple et faite en se référant aux dessins annexés sur lesquels :
- la figure 1 représente une vue en coupe schématique d'un exemple de réalisation d'un volant de direction notamment de véhicule automobile, selon l'invention;
- la figure 2 représente une vue de détail d'une zone déformable pouvant entrer dans la constitution d'un tel volant de direction ; et
- la figure 3 représente une vue de détail d'un autre exemple de réalisation d'un garnissage d'un tel volant.

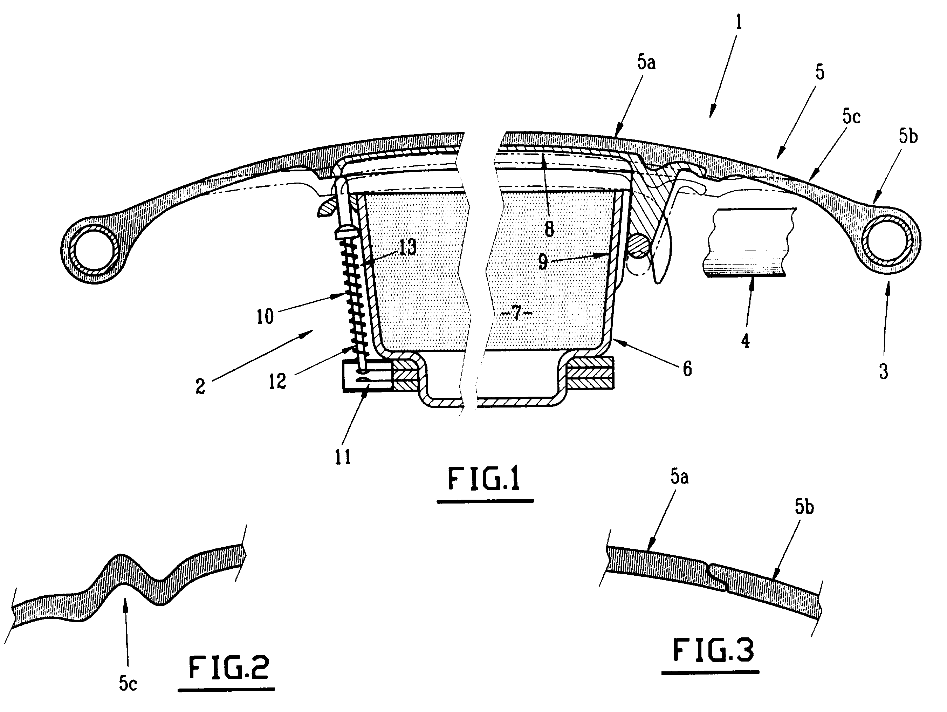

On reconnaît sur la figure 1, un volant de direction de véhicule automobile, désigné par la référence générale 1.

De façon classique, ce volant comporte un coussin central désigné par la référence générale 2, une jante annulaire désignée par la référence générale 3 et au moins un bras de liaison de cette jante au coussin central.

Pour des raisons de clarté du dessin, un seul bras de liaison est simplement schématisé sur cette figure et est désigné par la référence générale 4.

Ces différentes pièces sont revêtues de manière classique, d'un garnissage en matière plastique, désigné de façon générale par la référence 5 sur cette figure.

Dans l'exemple de réalisation représenté sur cette figure, le coussin central 2 comporte également une coupelle 6 de réception d'au moins une partie d'un module à sac gonflable 7, comprenant par exemple au moins un sac gonflable.

On sait en effet que tout ou partie d'un tel module à sac gonflable peut être logé dans cette coupelle de réception du coussin central du volant.

Par ailleurs, un couvercle 8 associé à cette coupelle 6 peut également être articulé, en 9, sur cette coupelle par l'intermédiaire de moyens d'articulation par exemple à crochets complémentaires, autorisant un flottement axial du couvercle 8 par rapport à la coupelle 6 et au reste du volant, comme cela sera décrit plus en détail par la suite.

De manière classique, ce couvercle 8 est en effet articulé sur le reste de la coupelle 6 pour permettre son dégagement lors du déclenchement du module à sac gonflable.

Par ailleurs, ce coussin central comporte également des moyens de manoeuvre 10 de moyens de commande 11 d'au moins un organe fonctionnel du véhicule.

De tels moyens sont régulièrement répartis autour de la coupelle de réception 6 du module à sac gonflable et comprennent chacun par exemple une tige 12 s'étendant le long de cette coupelle 6, cette tige étant associée à un ressort de rappel 13.

L'une des extrémités de cette tige 12 est associée au couvercle 8 de la coupelle, tandis que l'autre extrémité de celle-ci est associée par exemple à un interrupteur ou un commutateur de type classique, constituant les moyens de commande 11 décrits précédemment.

Dans l'exemple de réalisation représenté sur cette figure 1, le garnissage du coussin central du volant est venu de matière avec le garnissage du reste du volant et est relié à celui-ci, par l'intermédiaire de zones déformables.

Dans ce cas, ce garnissage de volant comporte alors par exemple une première portion 5a recouvrant le coussin central et fixée par exemple sur le couvercle 8 de la coupelle 6 de réception du module à sac gonflable et une seconde portion 5b recouvrant l'extrémité du ou de chaque bras 4 et la jante 3 de volant, ces portions de garnissage étant reliées par des zones déformables par exemple 5c, permettant le déplacement axial de la portion de garnissage du coussin central par l'utilisateur lorsqu'il appuie sur la face avant de celui-ci.

Il va de soi bien entendu que différentes formes de réalisation de ces zones déformables peuvent être envisagées, comme celle représentée sur cette figure 1 dans laquelle ces zones sont régulières.

Cependant, ces zones déformables peuvent également être ondulées comme celle illustrée sur la figure 2, ce qui permet d'améliorer les capacités de déformation de ces zones. Sur cette figure 2, ces zones déformables sont également désignées par la référence générale 5c.

On conçoit alors que la portion de garnissage 5a de ce coussin central est semi-rigide du fait de la présence du couvercle 8 de la coupelle 6 de réception du module à sac gonflable et que cette portion de garnissage 5a et ce couvercle 8 sont montés flottants par rapport à la coupelle 6 de réception du module à sac gonflable pour permettre, lorsque l'utilisateur appuie sur la face avant de ce coussin central, à cette portion de garnissage 5a de se déplacer axialement par rapport au reste du volant et en particulier par rapport à la coupelle 6 de réception du module à sac gonflable, afin d'autoriser l'actionnement des moyens de manoeuvre 10 des moyens de commande 11 de l'organe fonctionnel du véhicule par le couvercle 8.

La portion de garnissage 5a de ce coussin central 2 étant semi-rigide et étant montée flottante par rapport au reste du volant, quel que soit l'endroit de la face avant de celui-ci où l'utilisateur appuie, l'ensemble de cette portion de garnissage se déplace pour permettre l'activation de l'organe fonctionnel correspondant du véhicule, par manoeuvre de l'un des moyens de commande 11 régulièrement répartis autour de la coupelle de ce coussin central.

On notera bien entendu que différents modes de réalisation de ce volant de direction peuvent être envisagés, comme celui illustré sur la figure 3, dans laquelle on peut constater que la portion de garnissage du coussin central du volant, désignée également par la référence 5a sur cette figure, est distincte et séparée de la portion de garnissage 5b recouvrant le reste des pièces du volant.

Dans ce cas, ces portions de garnissage présentent sur leurs bords en regard, des formes complémentaires à emboîtement, permettant d'obtenir un accostage esthétique de celles-ci tout en autorisant un déplacement de la portion de garnissage du coussin central consécutivement à l'action d'un utilisateur sur la face avant de ce coussin central.

On notera également que selon une variante de réalisation, le couvercle de la coupelle de réception du module à sac gonflable peut être distinct et séparé de la portion de garnissage du coussin central. Dans ce cas, cette portion de garnissage comporte par exemple une pièce de structure permettant de la rigidifier ou est réalisée en matériau semi-rigide pour permettre son déplacement, dans son ensemble, par un utilisateur.

Dans l'exemple qui a été décrit, les moyens d'articulation du couvercle 8 sur la coupelle 6 comprennent des crochets d'articulation complémentaires autorisant un déplacement axial du couvercle par rapport à la coupelle.

Il va de soi que d'autres modes de réalisation de ces moyens peuvent être envisagés et que ceux-ci peuvent maintenir le couvercle en position sur la coupelle dans le cas où le couvercle n'est pas relié au garnissage du coussin central du volant, celui-ci étant alors monté flottant par rapport au couvercle, à la coupelle et au reste du volant pour permettre l'actionnement des moyens de commande.

## Revendications

1. Volant de direction, notamment de véhicule automobile, du type comportant un coussin central (2), une jante (3) et au moins un bras (4) de liaison de la jante au coussin central, revêtus d'un garnissage (5) en matière plastique, le coussin central comportant des moyens (10) de manoeuvre de moyens de commande (11) d'au moins un organe fonctionnel du véhicule, déplaçables par l'utilisateur, par appui sur la face avant de ce coussin central, caractérisé en ce que le coussin central comporte en outre une coupelle (6) de réception d'au moins une partie d'un module à sac gonflable (7) et en ce que le garnissage (5a) de ce coussin central est semi-rigide, est monté flottant par rapport à la coupelle de réception (6) du module à sac gonflable et est adapté pour actionner les moyens de manoeuvre (10), sous l'action de l'utilisateur.

2. Volant de direction selon la revendication 1, caractérisé en ce que le garnissage (5a) du coussin central est venu de matière avec le garnissage (5b) du reste du volant, et est relié à celui-ci par l'intermédiaire de zones déformables (5c).

3. Volant de direction selon la revendication 2, caractérisé en ce que les zones déformables (50) comportent des ondulations.

4. Volant de direction selon la revendication 1, caractérisé en ce que le garnissage (5a) du coussin central est distinct et séparé du garnissage (5b) du reste du volant et en ce que les bords en regard de ces garnissages comportent des formes complémentaires à emboîtement.

5. Volant de direction selon l'une quelconque des revendications précédentes, caractérisé en ce que la coupelle (6) de réception du module à sac gonflable comporte un couvercle (8) monté flottant axialement par rapport à cette coupelle, associé aux moyens de manoeuvre (10) et sur lequel est fixé le garnissage (5a) du coussin central de volant.

6. Volant de direction selon l'une quelconque des revendications précédentes, caractérisé en ce que des moyens de manoeuvre sont régulièrement répartis autour de la coupelle.
